Europäisches Patentamt

European Patent Office

Office européen des brevets

(11) Veröffentlichungsnummer: **0 366 824**

**A1**

(12) **EUROPÄISCHE PATENTANMELDUNG**

(21) Anmeldenummer: **88118342.0**

(22) Anmeldetag: **04.11.88**

(51) Int. Cl.5: **C01F 7/14 , C01F 7/47 , C09K 3/14**

(43) Veröffentlichungstag der Anmeldung:
**09.05.90 Patentblatt 90/19**

(84) Benannte Vertragsstaaten:
**AT BE CH DE ES FR GB GR IT LI LU NL SE**

(71) Anmelder: **VEREINIGTE ALUMINIUM-WERKE AKTIENGESELLSCHAFT**
**Georg-von-Boeselager-Strasse 25**
**D-5300 Bonn 1(DE)**

(72) Erfinder: **Brown, Neil, Dr.**
**Friedrichstrasse 43**
**D-5300 Bonn 1(DE)**

(54) **Verfahren zur Gewinnung von flitterartigen Böhmitaggregaten.**

(57) Bisher mußte das Schleifen einer Kunststoff- oder Metalloberfläche stets mit einem abrasiven und einem polierenden Material vorgenommen werden. Das neue Verfahren soll ein Böhmit mit einer solchen Korngröße und -struktur und mit niedrigen Kupfergehalten liefern, die geeignet sind zum Einsatz bei weichen Poliermitteln, bei denen sowohl die abtragende und die polierende Einwirkung in einer einzigen Formulierung erwünscht sind.

Ein derartiges Verfahren besteht aus folgenden Schritten: Bereitstellung einer kaustischen Aluminatlauge mit einem molaren Verhältnis K von $Na_2O_{frei}$ zu $Al_2O_3$ von weniger oder gleich eins, wobei diese Lauge Kupferionen in einer Menge von nicht mehr als 50 mg/l enthält; Unterwerfung dieser Lauge einer erhöhten Temperatur von mindestens etwa 150° C; Abkühlung der Lauge unter im wesentlichen ruhenden Bedingungen, wodurch die Aggregate von alpha-Aluminiummonohydroxid ausgeschieden werden, und Isolierung dieser alpha-Aluminiummonohydroxid-Aggregate.

Verwendung in Weichpoliermitteln

EP 0 366 824 A1

## Verfahren zur Gewinnung von flitterartigen Böhmitaggregaten

Die vorliegende Erfindung bezieht sich auf ein Verfahren zur Gewinnung von alpha-Aluminiummonohydroxid-(Böhmit-)Aggregaten in Flitteranordnung, welche die Größe und Form besitzen, die für Weichpoliertasten geeignet sind.

Aluminiumhydroxide im allgemeinen und Böhmit ($\alpha$-AlOOH) im besonderen werden verbreitet in Weichpolierzubereitungen verwendet, wobei die abrasive Substanz vermischt wird mit Wachs, Fett, Öl oder Wasser um einen Block, eine Paste oder Flüssigkeitssupension zu bilden. Die für ein abrasives Mittel wichtigen Eigenschaften, welche seine Polierfähigkeit beeinflussen, beziehen sich auf die Korngröße, Kornform und Zerreißbarkeit (die Eigenschaft, unter dem Polierdruck leicht zu zerfallen). In einer sehr allgemeinen Beschreibung bewirken grobe Partikel eine Abhängigkeit des Materials mit schlechter Oberflächenstruktur (Finish), während feine Partikel weniger Material abtragen, aber eine gute Oberflächenstruktur zurücklassen. Bisher mußte das Schleifen einer Kunststoffoberfläche oder Metalloberflächenbehandlung stets mit einem abrasiven und mit einem polierten Material vorgenommen werden.

Die vorliegende Erfindung liefert ein Verfahren zur Herstellung von Böhmit mit einer solchen Korngröße und -struktur, welche zwei Schleifverfahren nacheinander mit einem einzigen Abrasivpulver anzuwenden erlaubt, so daß die abtragende Einwirkung (zur Beseitigung von Oberflächenschäden, Kratzern usw.) und das Polieren der glatten Oberfläche in einer einzigen Polieroperation vereinigt werden können.

Es ist bekannt, daß Böhmit die thermodynamisch stabile Aluminiummonohydroxidphase in den alkalischen Aluminatlaugen des wohlbekannten Bayer-Prozesses bei Temperaturen oberhalb 100°C darstellt. Dementsprechend lassen sich feine Böhmitkristalle aus diesen Lösungen bei Temperaturen oberhalb 100°C abscheiden. Von erheblicher kommerzieller Bedeutung ist die Methode zur Böhmitherstellung, wobei Aluminiumtrihydroxid (Gibbsit) aus dem Bayer-Prozeß in Wasser oder Dampf unter hydrothermalen Bedingungen aufgeschlossen werden (vgl. beispielsweise US-Patent Nr. 3,954,957 von KOENIG vom 4. Mai 1976). In dem Gibbsit-Verfahren ist es günstig, wenn anwesende Alkalien oder Säuren den Aufschluß beschleunigen und die Produktkorngröße steuern. Zwar sind die einzelnen durch diesen Prozeß gewonnenen Partikel im allgemeinen sehr klein, weniger als 1 $\mu$m, aber sie bilden Aggregate von 40-60 $\mu$m. Die Aggregate sind jedoch brüchig und instabil, so daß viele von den Kristalliten freigesetzt werden, was die Verwendbarkeit des so hergestellten Böhmits einschränkt. Obwohl bei manchen anderen Anwendungsbeispielen sich solche Partikel aus den vorbekannten Verfahren anwenden lassen, sind sie nicht geeignet für Polierverfahren, wo zuerst Abtragung und dann Oberflächenpolierung verlangt werden. Beide Schritte sollte durch eine einzige Formulierung durchzuführen sein, beispielsweise beim Polieren von Kunststoffbrillengläsern oder Kunststoffartikeln, Autolacken, lackierten Oberflächen u.ä.

Es wurde gefunden, daß wenn die Oxidation der alkalischen Aluminatlaugen (d.h. der Prozeß der Entfernung der organischen Verunreinigungen aus Aluminatlaugen wie in dem Bayer-Prozeß) unter hydrothermalen Bedingungen mit wesentlich verringerten Konzentrationen des Kupferkatalysators durchgeführt wird, etwa 50% des Aluminiumoxidgehalts der Lauge als kupferhaltiger Böhmit abgeschieden werden kann. Sind die Kupferkonzentrationen im Böhmit nicht mehr als etwa 0,1 Gew.-%, dann ist die Korngröße und Konstruktur der entstehenden Böhmitaggregate derart beschaffen, daß diese geeignet sind zum Einsatz in beispielsweise Weichpoliermitteln, wo sowohl die abtragende als auch die polierende Einwirkung in einer einzigen Formulierung erwünscht sind.

Die Aufgabe vorliegender Erfindung ist es, ein Verfahren zur Herstellung der großen Böhmitkristallaggregate mit einer neuartigen Kristallstruktur zu geben.

Ein weiteres Ziel der vorliegenden Erfindung ist es, eine neuartiges Böhmitform mit niedrigen Kupfergehalten herzustellen, die geeignet ist zur Verwendung bei weichen Poliermitteln.

Diese und andere Ziele der vorliegenden Erfindung werden dem Durchschnittsfachmann aus der Beschreibung, den begleitenden Ansprüchen und den anliegenden Zeichnungen ersichtlich sein.

### Kurze Beschreibung der Zeichnungen

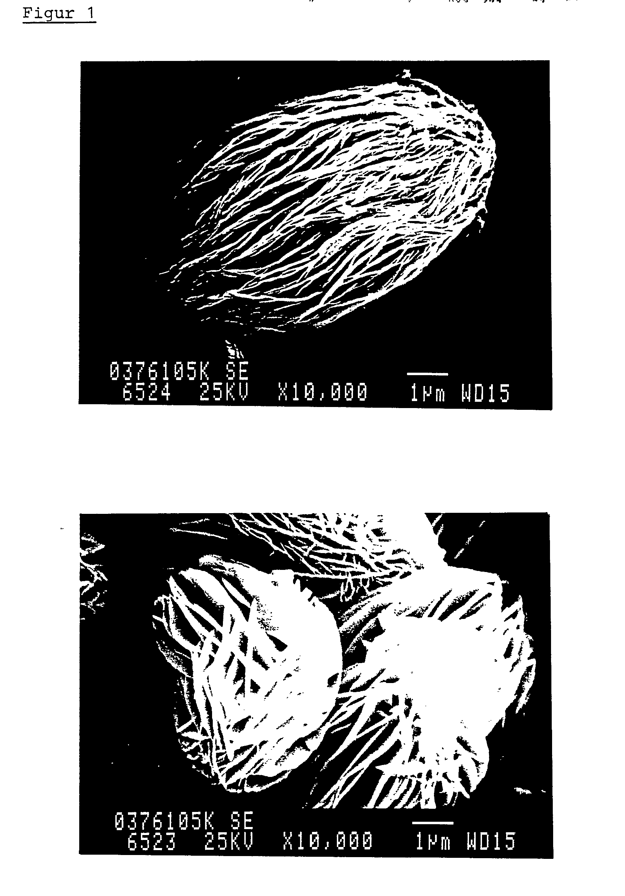

Fig. 1 ist eine Rasterelektronmikroskopaufnahme 10000 x vergrößert der Böhmitkristalle, die entsprechend dem Stand der Technik gewonnen wurden und relativ große Menge Kupfer enthalten.

Fig. 2 ist ein Fließbild, welches die bevorzugte Durchführungsweise der vorliegenden Erfindung darstellt.

Fig. 3 ist eine Rasterelektronmikroskopaufnahme, 250 x vergrößert, welche die großen Aggregate des Böhmits gemäß der vorliegenden Erfindung zeigt.

Fig. 4 ist eine weitere Rasterelektronmikroskopansicht (1500 x), welche die großen Böhmitteilchen gemäß der vorliegenden Erfindung zeigt.

Fig. 5 ist noch eine weitere REM-Aufnahme (1300x) mit großen Böhmitaggregatteilchen gemäß der vorliegenden Erfindung.

Fig. 6 ist eine REM-Aufnahme (1000 x), welche den Zusammenbruch der größen Böhmitflitter unter der Druckeinwirkung eine typische Polierung.

## Zusammenfassung der Erfindung

Die vorliegende Erfindung betrifft einen Prozeß zur Gewinnung großer Böhmitkristallaggregate. Der Prozeß besteht aus Karbonisierung der alkalischen Aluminatlauge mittels Oxidation der organischen Substanzen bei erhöhten Temperaturen und Drücken in Anwesenheit von etwa 1 bis 150 mg/l Kupferionen. Die Lauge wird so lange oxidiert bis ein Molverhältnis von $Na_2O_{frei}$ zu $Al_2O_3$ von weniger oder gleich eins erreicht wird.

Die karbonisierte Lauge wird dann in Ruhe abgekühlt, d.h. mit wenig oder ohne Rührung, wodurch die Böhmitkristallisation verursacht wird. Typischerweise liegen die entstehenden Böhmitaggregate im wesentlichen in dem Größenbereich von etwa 20 bis 200 μm mit mindestens 95% des Produktes in diesem Bereich. (Einzelne Kristalle sind typischerweise 2 bis 25 μm im Durchschnittsdurchmesser.)

Die Erfindung liefert ein Böhmitprodukt, dessen Partikel im wesentlichen im Größenbereich von etwa 20 bis etwa 200 μm liegen. Vorzugsweise haben die Kristalle in den Partikeln ein hohes Längenverhältnis (Formfaktor) zwischen 20 : 1 bis 40 : 1, wobei die Partikel eine niedrige Schüttdicke von 50 bis 200 kg/m³ und einen Gühverlust von 15% aufweisen.

Das Böhmitprodukt ist auch durch die vollkommene Abwesenheit aller anderen Aluminiumoxid- oder Aluminiumhydroxidformen gekennzeichnet.

## Ausführliche Beschreibung der Erfindung

Eine neue Methode zur Gewinnung von Böhmitpartikeln (hiernach auch als Flitter bezeichnet) mit einer neuartigen Form und Struktur, welche besonders geeignet ist für den Einsatz in Weichpolieroperationen, welche die Abtragung und den Poliervorgang in einem Mittel vereinigen.

US 4,668,486 beschreibt ein Verfahren zur Entfernung von organischen Kohlenstoffverunreinigungen aus Laugen des Bayer-Prozesses. In diesem Prozeß werden die organischen Verunreinigungen in den Laugen oxidiert, indem die Lauge mit einem sauerstoffhaltigen Gas unter beispielsweise 40 bar $O_2$ (bei 25°C) Druck während 10 bis 60 min in Anwesenheit von 1 - 5000 mg/l, vorzugsweise 500 mg/l Kupferionen (als Katalysator) behandelt wird. Dies ist bekannt als die kupfer-katalysierte Oxidation der organischen Substanz. Böhmit wird aus der Lösung in dem Autoklaven abgeschieden (nach der Oxidation der organischen Substanz) während das System sich zu den atmospärischen Druck-und Temperaturbedingungen abkühlt, falls die folgende kritische Bedingung in der Lauge erreicht wird, nämlich

$K \leq 1$ wobei:

K als das Molverhältnis von $Na_2O_{frei}$ zu $Al_2O_3$ in der Lauge definiert wird. $Na_2O_{frei}$ bedeutet die Menge Alkali als NaOH, welche mit $Al_2O_3$ zu Natriumaluminat verbunden ist.

Wird der numerische Wert von K in der oxidierten Lauge kleiner oder gleich 1, scheidet aus der oxidierten Lauge der Böhmit während des Abkühlungsschrittes des Prozesses aus.

Der anmeldende Erfinder hat unerwarterweise entdeckt, daß, wenn die Oxidation der organischen Substanz oder die Laugenkarbonisierung in Anwesenheit von sehr kleinen Kupferkonzentrationen (zugegeben als Katalysator für die Oxidationsreaktion) im Vergleich zu dem Bereich, der in der bereits erwähnten US-Patent chrift Nr. 4,468,486 beschrieben ist, und wenn der Böhmit abgeschieden wird unter ruhenden Bedingungen mit wenig oder ohne Rührung während der Abkühlungphase, dann entstehen Böhmitkristalle einer neuartigen Größe und Form, welche auch neuartige Eigenschaften aufweisen. Die Kupferkonzentration in der alkalischen Aluminatlösung, aus der diese neuartigen Kristalle gewonnen werden, liegt ungefähr im Bereich zwischen 1 und 50 mg/l. Bei Kupferkonzentrationen höher als 50 mg/l (vorausgesetzt, daß typischerweise etwa 50 g/l Böhmit gewonnen werden), werden die Partikel zunehmend kleiner und weniger kompakt, weniger plättchenartig als der Kupfergehalt in diesen Böhmitpartikeln sich erhöht. Bei Konzentrationen von weniger als 1 mg/l Kupfer werden Flitter entstehen in immer kleineren Mengen, da die minimale Menge Kupfer in Flittern 0,001% beträgt.

Gemäß der vorliegenden Erfindung wird wie im Bayer-Prozeß eine alkalische Aluminatlösung gewonnen. Die Lauge wird oxidiert durch den Kontakt mit einem sauerstoffenthaltenden Gas bei erhöhtem Druck und erhöhter Temperatur (gewöhnlich in einem Autoklaven) in Anwesenheit von 1-50 mg/l Kupferionen. Die weiten Druck- und Temperaturarbeitsbereiche liegen von $120°C$ und 40 bar $O_2$ bis zu $300°C$ und 150 bar Gesamtdruck. Bevorzugte Arbeitsbereiche für diesen Schritt liegen zwischen 260 und ca. $300°C$ und zwischen ca. 20 und 40 bar $O_2$ (bei $25°C$). Die Karbonisierung der Lauge als ein Ergebnis der organischen Oxidation wird fortgesetzt bis ein Molverhältnis von $Na_2O_{frei}$ zu $Al_2O_3$ von weniger oder gleich 1 erreicht ist. Die Verweilzeit (die Zeit, in der die Lauge unter erhöhtem Druck und erhöhter Temperatur gehalten werden muß) liegt für diesen Schritt bei typischerweise zwischen 10 und 60 Minuten. Die Lauge wird dann gekühlt unter ruhenden Bedingungen von wenig oder ohne Bewegung und die Böhmitkristalle werden gemäß der vorliegenden Erfindung abgeschieden. Die benötigte Menge der Bewegung ist eine Funktion der Reaktor- (d.h. Autoklaven-) Ausführung. Keine Bewegung ist notwendig, wenn die abgeschiedenen Partikel leicht entfernt werden können, nachdem sie sich auf dem Boden des Reaktors gesetzt haben. Wenn die Reaktorausführung derart ist, daß die Partikel nicht leicht aus gewaschen werden können am Ende der Reaktion, dann kann eine kleine Menge mechanischer Bewegung vorgesehen werden, um das Setzen des Böhmits zu verhindern.

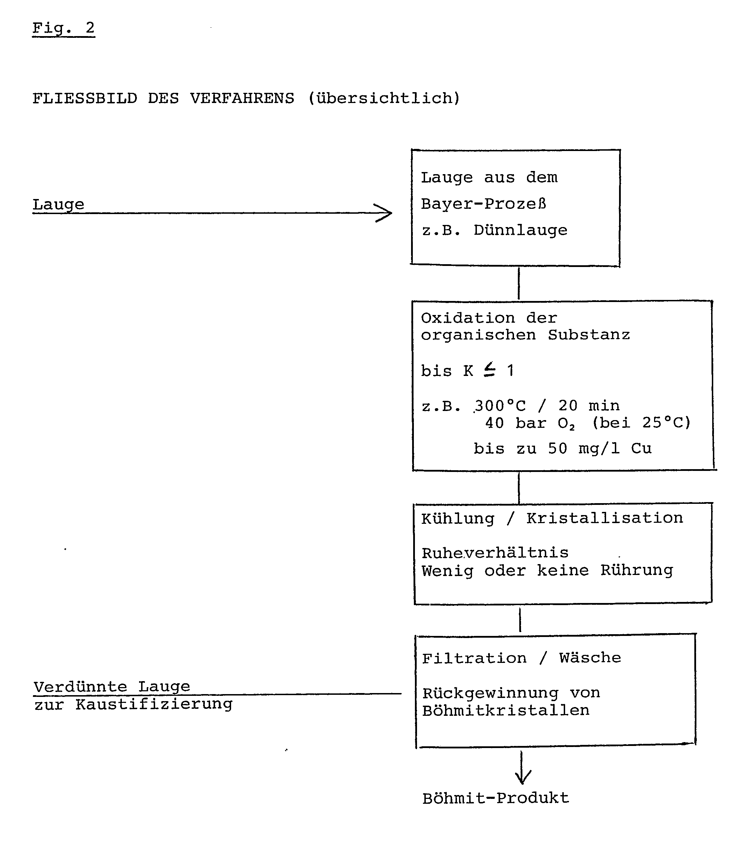

Ein Fließdiagramm, welches die typischen Arbeitsbedingungen für die bevorzugte Ausführung der vorliegenden Erfindung zeigt, wird in Fig. 2 dargestellt.

Der Kupfergehalt der kupferenthaltenden Böhmitkristalle der vorliegenden Erfindung liegt im Bereich zwischen ca. 0,001% bis ca. 0,1% Kupfer basiert auf Böhmit. Das Kupferniveau in dem Kristallgitter ist bedeutend niedriger als der, beschrieben im US-Patent Nr. 4,668,486, wo der kupferhaltige Böhmit als Katalysator/Katalysatorträger-System verwendet wird.

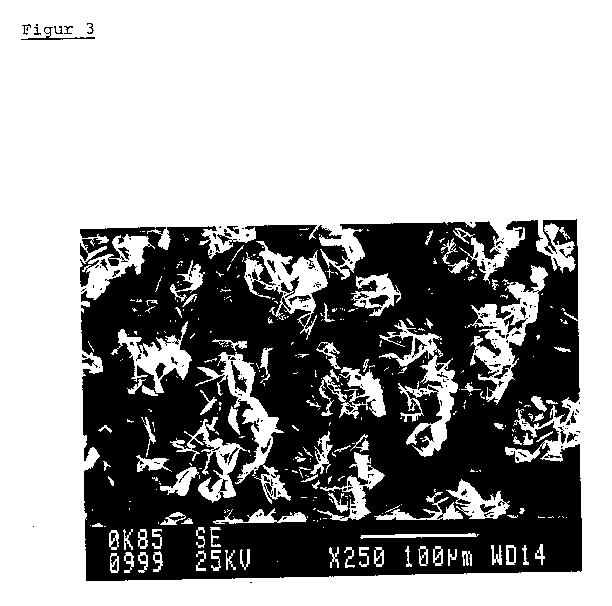

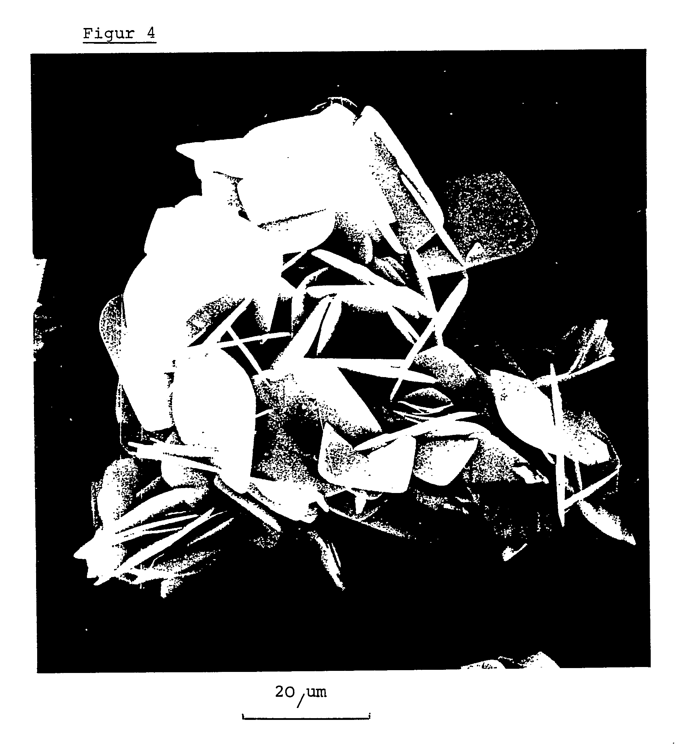

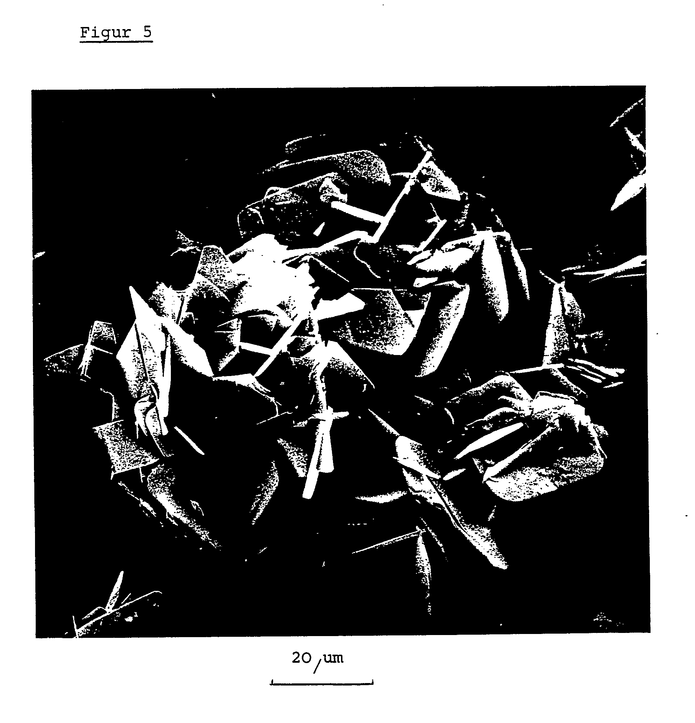

Beispiele der komplexen Struktur der kupferenthaltenden Böhmitpartikel der vorliegenden Erfindung werden in Fig. 3-5 gezeigt. Die Böhmitkristalle der vorliegenden Erfindung sind dünne, blättchenförmige Kristalle mit einem hohen Aspektverhältnis (dem Verhältnis der basalen Ebenenachse zu der vertikalen Achse, wobei die Kristallebene in horizontaler Lage angenommen wird), d.h. etwa 40 : 1.

In einer anderen Ausführung der vorliegenden Erfindung erhält man eine alkalische Aluminatlauge, welche eine niedrige $Al_2O_3$ Konzentration aufweist und ein Molverhältnis K höher als 1 hat. Aluminiumtrihydroxid (Gibbsit) wird als dann zugegeben und danach aufgelöst bei einer Temperatur von mindestens etwa $180°$ bis $190°C$ (d.h. oberhalb der Böhmitkeimbildung), wobei der Druck mindestens 10 bis 13 bar beträgt, um dadurch das Molverhältnis auf einen Wert von weniger oder gleich 1 zu bringen. Auch kann man $CO_2$-Gas einleiten, um das Molverhältnis K auf weniger oder gleich 1 einzustellen. Im letzteren Fall reagiert das Gas mit $Na_2O_{frei}$, welches in der Lauge anwesend ist und senkt die $Na_2O_{frei}$ - Konzentration. Die einzuleitende $CO_2$-Gasmenge errechnet sich aus der Maßgabe der Menge von $Na_2O_{frei}$, welche zu Natriumkarbonat umgewandelt werden muß, um den K-Wert auf weniger oder gleich 1 einzustellen. $CO_2$ wird danach in die Lauge im Autoklaven eingeleitet und kleine Proben (2 ml) werden ent nommen zur Bestimmumg des in der Lauge anwesenden $Na_2O_{frei}$ durch Beobachtung des pH-Wertes der Lauge. Der pH-Wert fällt, weil $CO_2$ und $Na_2O_{frei}$ sich zu Natriumkarbonat umsetzen. Nachdem das gewünschte $Na_2O_{frei}$ erreicht wird, wird das $CO_2$-Einblasen eingestellt. In jedem Fall wird nach der nachfolgenden Oxidation der organischen Substanz und folglich weiterer Karbonisierung die Lauge abgekühlt und es scheiden sich Böhmitkristalle gemäß der vorliegenden Erfindung aus.

Die Kupferkonzentration in der Lauge zum Zeitpunkt der Böhmitausscheidung stellt eine wichtige Größe dar, da sie später die Kristallwachstumsform beinflußt. Die Obergrenze des in der Lauge anwesenden Kupfergehaltes gemäß der vorliegenden Erfindung ist etwa 0,05 g/l Kupfer. Böhmitkristalle gemäß der vorliegenden Erfindung sollten nicht mehr als etwa 0,1% Cu-Gehalt haben.

Kupferhydroxid, Kupferoxid oder Kupfersulfat sind nicht einschränkende Beispiele des Kupferkatalysators, welche bei der Durchführung der vorliegenden Erfindung verwendet werden können.

Eine weitere Größe, die die Kristallform beinflußt, ist die Rührintensität während der Abkühlung der Lauge, die in der organischen Substanz oxidiert wurde. Die Abkühlung sollte unter wenig oder gar keiner Rührung erfolgen (ruhende Bedingungen). Unter wenig Rührung versteht man diejenige Rührung, die gerade ausreicht, um die Sedimentation der Feststoffe im Autoklaven zu verhindern. Findet mehr als diese minimale Rührung statt, dann haben die resultierenden Böhmitkristalle nicht die geforderte Partikelgröße oder -struktur.

Die Vorteile der Verbindung der Böhmitausscheidung mit der Oxidation der organischen Substanz in einer Bayer-Lauge sind mindestens 2-fach. Zuerst ist das Böhmitprodukt nicht verunreinigt durch die färbenden Verbindungen, welche in Bayer-Laugen normalerweise anwesend sind. Zweitens kann die Böhmitausbeute wesentlich erhöht werden, indem zusätzliche $Al_2O_3$ haltige Verbindungen , wie Aluminiumhydroxid bei hohen Temperaturen unter einer Sauerstoffatmosphäre in der zu oxidierenden Lauge aufgelöst werden. Aluminiumtrihydroxid kann bis zu 200 g/l $Al_2O_3$ aufgelöst werden, bei einem $Na_2O_{frei}$ Gehalt von 140 g/l bei $300°C$ unter einem Druck bis zu etwa 150 bar.

4

Anderenfalls, falls der Weißheitsgrad des Böhmitproduktes und eine hohe Laugenproduktivität nicht entscheidend sind, dann können die experimentellen Bedingungen gelockert werden, und die $CO_2$-Gaseinleitung als Alternative oder teilweise Alternative zu der obenerwähnten Zugabe von organischen Verbindungen verwendet werden. So können die experimentellen Bedingungen bis in den Bereich von etwa 150 bis etwa 300°C gesenkt und eine Luftatmosphäre kann anstelle eines Sauerstoff-angereicherten Gases verwendet werden. 150°C wird als die optimale Temperatur für Böhmitkristallisation angesehen ohne Rücksicht wie die Lauge vor diesem Schritt behandelt wurde.

Die Eigenschaften eines typischen Böhmitproduktes, welches entsprechend diesem Prozeß hergestellt wurde, sind wie folgt:

TABELLE 1

| Durchschnittliche Partikelgröße | = | 20 - 200 $\mu$m |
|---|---|---|
| % $Na_2O$ | = | 0,20 - 0,25 % |
| % Böhmit | = | 100% (gem. der Röntgenstrahlendiffraktion) |
| Glühverlust | = | 15% (d.h. theoretisch) |
| Schüttdichte | = | 50-200 kg m$^{-3}$ |
| Kupfergerhalt | = | 0,001 - 0,10 % |

Rasterelektronmikroskopie zeigte, daß die Böhmitpartikel aus einem verzahnten Netzwerk von dünnen, nicht-orientierten tafefförmigen Kristallen mit einem hohen Aspektverhältnis, (d.h. mit einem hohen Verhältnis der basalen Ebenenachse, die horizontal zu der vertikalen Achse angenommen wird), die einzelnen Kristallgrößen liegen im Bereich von 5 bis 25 $\mu$m in der längsten Dimension. Unter nichtorientierten Aggregatteilchen versteht man solche in denen die Kristalle in Winkeln von mehr als 20° zuein ander liegen. Unter dem angewandten Druck einer simulierten Poliertätigkeit zerfallen die relativ mürben Böhmitpartikel zu einzelnen flachen Plättchen, einer Struktur, die nur die abschließende Glanzschleifung ausüben kann.

Recht breite Variationen innerhalb des Partikelbereichs von 20 -200 $\mu$m werden die grundsätzlichen Poliereigenschaften der Flitterchen nicht beeinträchtigten unter der Voraussetzung, daß die Aggregatstruktur der Partikel erhalten bleibt. Eine beträchtliche Anzahl von nichtaggregierten Teilchen (mehr als 20%) wäre nicht annehmbar.

Das Böhmitprodukt gemäß der vorliegenden Erfindung hat bei der Betrachtung mit bloßem Auge eine besondere Erscheinung und ist relativ grob und sandartig in seiner Textur. Entsprechend seinem niedrigen Gehalt an organischer Substanz und Kupfer ist es weiß und hat eine niedrige Schüttdicke im Bereich von etwa 50 bis 200 kg/m$^{-3}$.

Die gewonnenen Böhmitaggregate, welche 0,001 bis 0,1% Kupferionen enthalten, sind aus viereckigen, niedrigen Plättchen von Böhmit zusammengesetzt, welche in einer "Flitter"-Form angeordnet sind, wie aus Fig. 3 ersichtlich. Die Kupferionen sind zwischen die Aluminiumhydroxidschichten des Kristallgitters gelagert. Die Aggregate sind aus einem verzahnten Netzwerk von etwa 100 Plättchen zusammengesetzt. Die Röntgenstrahlendiffraktionsuntersuchungen zeigten, daß die entstandenen Kristalle 100%-ig Böhmit sind und zeigten, daß jedwede andere Aluminiumoxidform abwesend ist.

Fig. 3-5 zeigen die Analyse des Böhmitproduktes mittels Rasterelektronmikroskopie. Die Aggregatteilchen sind aus einem verzahnten Netzwerk von großen plättchenförmigen Kristallen mit einem hohen Aspektverhältnis zusammengesetzt. Der geschätzte Bereich des Aspektverhältnisses aus den vergrößerten Bildern liegt zwischen 20 : 1 bis 40 : 1, wobei die größte Dimension der plättchenförmigen Kristalle bis zu etwa 25 $\mu$m liegt. Die einzelnen Plättchen sind wohl definiert mit scharfen Grenzen, was einen hohen Kristallinitätsgrad bezeugt. Ohne sich durch theoretische Überlegungen binden zu lassen, glaubt man, daß die Entwicklung der Partikelstruktur durch das Wachstum der einzelnen keimenden Partikel verursacht wird, anstatt durch eine ununterbrochene Bildung von neuen Kristallen, welche zusammen die Aggregate formen.

Die vorliegende Erfindung wird unten in spezifischen Beispielen beschrieben, welche weiter die Erfindung erläutern sollen ohne sie einzuschränken.

BEISPIEL 1

30 ml Dünnlauge aus dem Bayerverfahren hat die folgende Zusammensetzung:

| Na$_2$O$_{frei}$ | = | 138,3 g/l |
|---|---|---|
| Al$_2$O$_3$ | = | 86,5 g/l |
| Organischer Kohlenstoff | = | 27,1 g/l |
| Natriumoxalat | = | 3,4 g/l |

Die Lauge wurde in einem 100 ml Autoklaven aus rostfreiem Stahl bei 300°C Temperatur für 20 Minuten in Anwesenheit von 20 mg/l Kupfer, zugegeben als CuSO$_4$ X 5H$_2$O, oxidiert. Gasförmiger Sauerstoff wurde in den Autoklaven eingeführt bis zu dem Druck von 40 bar (gemessen bei 25°C). Die oxidierte Lauge wurde bis zu etwa 80°C abgekühlt bei wenig oder keiner Rührung, wobei Böhmitkristalle in einer Menge von 1,42 g aus der Lösung abgeschieden wurde. Die Zusammensetzung der oxidierten Lauge im Autoklaven war

| Na$_2$O$_{frei}$ | = | 44,6 g/l |
|---|---|---|
| Al$_2$O$_3$ | = | 39,2 g/l |
| Organischer Kohlenstoff | = | 8,4 g/l |
| Natriumoxalat | = | 3,8 g/l |

Somit war der Wirkungsgrad der Oxidation der organischen Substanz etwa 69%. Die Böhmitkristalle enthielten 0,013 % Kupfer, d.h. etwa die Hälfte der ursprünglich zugefügten Menge, während die oxidierte Lauge weniger als 1 mg/l Cu enthielt. Die entstandenden Partikel werden in Fig. 3-5 gezeigt.


BEISPIEL 2

**POLIEREFFEKT DER BÖHMIT-FLITTER**

Ein Reihe von Untersuchungen wurden durchgeführt, um die einzigartigen Eigenschaften der Böhmitflitter gemäß der vorliegenden Erfindung bei ihrem Einsatz in Poliermitteln vorzuführen.

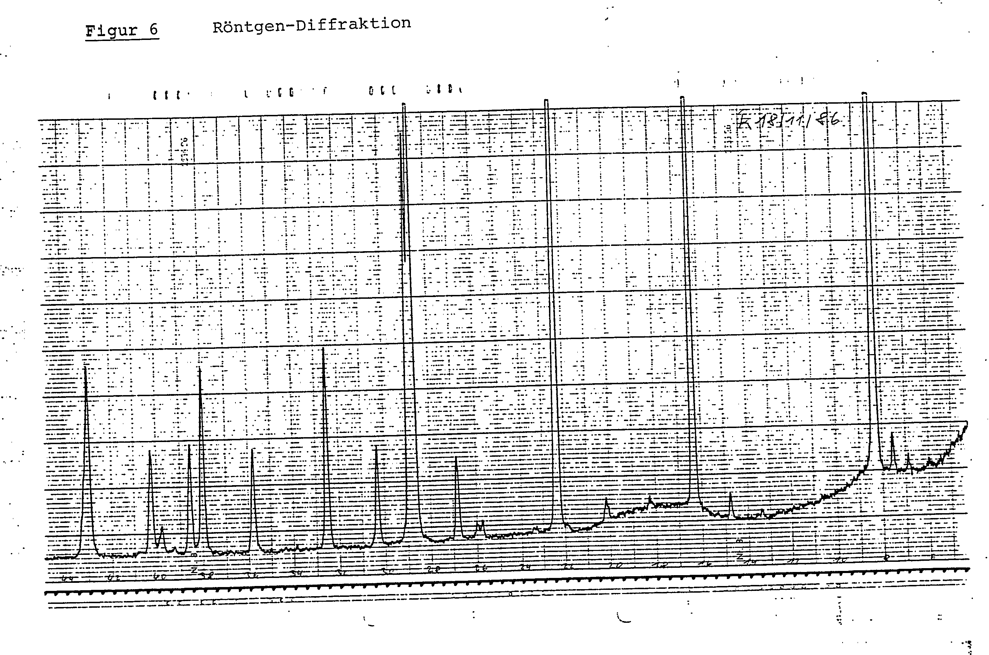

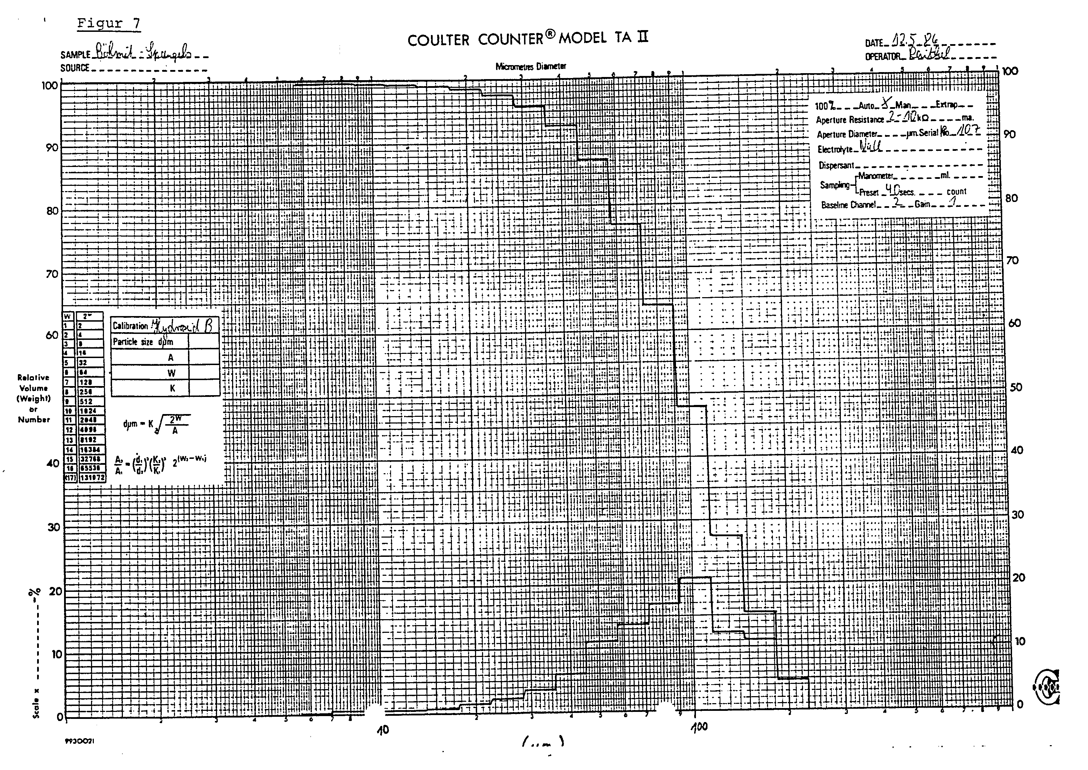

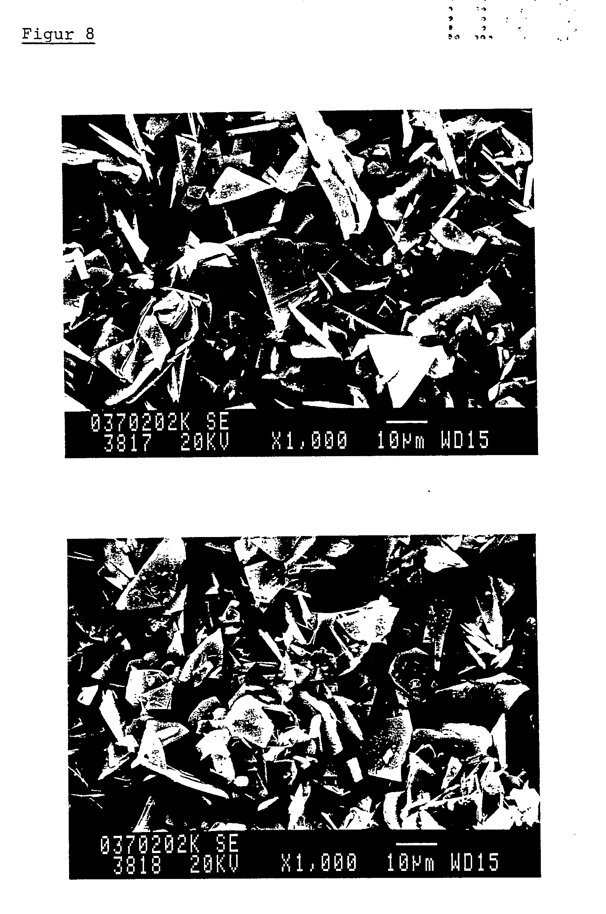

Bei ersten Test wurde auf einem Mikroskopglas eine Schicht von Böhmitkristallen gemäß der vorliegenden Erfindung angebracht, ein anderes Glas wurde daraufgelegt und Druck direkt zwischen Daumen und Zeigefinger ausgeübt. Die Böhmitpartikel-Strukturen zerfielen unter dem Druckeinfluß in ihre einzelnen Plättchen, wie in Fig. 6 gezeigt, und bewiesen dadurch ihre Zerreißbarkeit.

Im zweiten Test wurde eine Schicht von Böhmitflittern gemäß der vorliegenden Erfindung an die Oberfläche eines Probenhalters für rasterelektronmikroskopische Untersuchungen (ein zylindrischer Metallprobenhalter mit flacher Oberseite von 1 cm Durchmesser und 1 cm Länge) mittels eines beiderseitigen Tesabandes (Bayer AG, Hamburg, BRD) befestigt und dann mit einer leichten (mit der Hand) Polierbewegung über die Oberfläche eines Mikroskopglases bewegt. Wie oben ersichtlich, brach die Böhmitstruktur ein. Zusätzlich war die wichtigste Feststellung in diesem Test, daß keine Kratzer an der Glasoberfläche beobachtet werden konnten.

In einem dritten Test wurden die Böhmitpartikel aus dem zweiten Test bei Polierung mit der Hand (10-20 Bewegungen) über eine aufgerauhte Oberfläche einer Aluminiumtestprobe bewegt. Die Böhmitteilchen benahmen sich ähnlich wie vorher und die aufgerauhten Schichten der Aluminiumoberfläche wurden deutlich durch die Böhmitflitter abgetragen. Am Ende war die Aluminiumoberfläche frei von Kratzern und Schadstellen an der Oberfläche. Die vorliegende Erfindung wurde im vorhergehenden beschrieben mit Hinweisen auf bevorzugte Durchführungsweisen. Dem Durchschnittsfachmann ist es klar, daß viele Zusätze, Streichungen und Ersätze sich durchführen lassen, ohne den Grundgedanken und Bereich der Erfindung wie weiter beansprucht, zu verlassen.


**Ansprüche**

1. Verfahren zur Gewinnung von großen Aggregaten des alpha-Aluminiummmonohydroxids, gekennzeichnet durch folgenden Schritte:

Einstellung einer kaustischen Aluminatlauge bei Temperaturen über 100° C in Anwesenheit einer Menge von Kupferionen von 1 bis 50 mg/l, bis das Molverhältnis von $Na_2O_{frei}$ zu $Al_2O_3$ in der Lauge weniger oder gleich 1 wird;

Abkühlen dieser Lauge und Keimbildung großer alpha-Aluminiummonohydroxidteilchen unter nicht-turbulenten Bedingungen; und

Gewinnung eines alpha-Aluminiummonohydroxidproduktes in Form von Aggregatpartikeln.

2. Verfahren nach Anspruch 1, dadurch gekennzeichnet, daß die Abkühlung in laminarer Strömung erfolgt.

3. Verfahren zur Herstellung von alpha-Aluminiummonohydroxidaggregaten, welche verwendbar sind in Weichpoliermitteln, gekennzeichnet durch folgende Schritte:

Bereitstellung einer kaustischen Aluminatlauge mit einem molaren Verhältnis K von $Na_2O_{frei}$ zu $Al_2O_3$ von weniger oder gleich eins, wobei diese Lauge Kuperionen in einer Menge von nicht mehr als 50 mg/l enthält;

Unterwerfung dieser Lauge einer erhöhten Temperatur von mindestens etwa 150° C;

Abkühlung dieser Lauge unter im wesentlichen ruhenden Bedingung, wodurch die Aggregate von alpha-Aluminiummonohydroxid ausgeschieden werden, und Isolierung dieser alpha-Aluminiummonohydroxid-Aggregate.

4. Verfahren nach einem der vorhergehenden Ansprüche, dadurch gekennzeichnet, daß das Molverhältnis durch Zugabe von Aluminiumhydroxid oder anderen löslichen Aluminiumverbindungen in die Lauge eingestellt wird.

5. Verfahren nach einem der vorhergehenden Ansprüche, dadurch gekennzeichnet, daß das Molverhältnis durch Einleitung von $O_2$- und/oder $CO_2$-Gas eingestellt wird.

6. Verfahren nach einem der vorhergehenden Ansprüche, dadurch gekennzeichnet, daß das Molverhältnis in der Lauge dadurch erreicht wird, daß man organische Kohlenstoffverbindungen vor der Oxidation zugibt.

7. Verfahren nach einem der vorhergehenden Ansprüche, dadurch gekennzeichnet, daß man von einer Bayer-Lauge mit einem Gehalt von organischem Kohlenstoff ausgeht, der ausreicht, um das Molverhältnis weniger oder gleich 1 zu erreichen.

8. Verfahren nach einem der vorhergehenden Ansprüche, dadurch gekennzeichnet, daß die Menge an organischem Kohlenstoff in der Bayerlauge größer oder gleich 20 g/l ist.

9. Verfahren nach einem der vorhergehenden Ansprüche, dadurch gekennzeichnet, daß die Einstellung des Molverhältnisses durch Bildung von $CO_2$ in der Lauge ermöglicht wird.

10. Alpha-Aluminiumonohydroxid-Aggregat, dadurch gekennzeichnet, daß es 0,001 - 0,1% Kupfer enthält und im Wesentlichen aus viereckigen flachen Plättchen des alpha-Aluminiummonohydroxids in einer Flitteranordnung besteht.

11. Aggregat nach Anspruch 10, dadurch gekennzeichnet, daß die einzelnen plättchenförmigen Kristalle einen Formfaktor von 20 : 1 bis 40 : 1 bei einer niedrigen Schüttdichte der Aggregate von 50 bis 200 $kg/m^{-3}$ und einem Glühverlust von 15% aufweisen.

12. Aggregat nach einem der vorhergehenden Ansprüche, dadurch gekennzeichnet, daß die alpha-Aluminiummonohydroxid-Partikel in Flitteranordnung im Größenbereich von 20 bis 200 µm liegen.

13. Aggregat nach einem der vorhergehenden Ansprüche, gekennzeichnet durch einen Kupfergehalt zwischen 0,001% bis 0,1%, wobei die Kupferionen zwischen den Aluminiumhydroxid-Schichten des Kristallgitters angesiedelt sind.

14. Aggregat nach einem der vorhergehenden Ansprüche, gekennzeichnet durch ein alpha-Aluminiummonohydroxid, welches nichtorientierte Kristallplättchen enthält, die eine offene Struktur mit niedriger Schüttdichte von weniger als 200 $kg/m^3$ bilden, wobei dieses Aggregat unter Druckanwendung zu einzelnen Plättchen zerfällt bei Einsatz dieses Aggregats in Poliermitteln.

15. Aggregat nach einem der vorhergehenden Ansprüche, dadurch gekennzeichnet, daß der erwähnte Anwendungsdruck denjenigen beinhaltet, der durch menschliche Hand ausgeübt werden kann.

16. Aggregat nach einem der vorhergehenden Ansprüche, dadurch gekennzeichnet, daß es zwischen 100 - 200 µm im Durchmesser liegt und ein verzahntes Netzwerk von etwa 100 Kristallplättchen enthält.

Figur 1

0376105K SE
6524 25KV X10,000 1µm WD15

0376105K SE
6523 25KV X10,000 1µm WD15

Fig. 2

FLIESSBILD DES VERFAHRENS (übersichtlich)

Lauge $\longrightarrow$

```
┌─────────────────────┐
│ Lauge aus dem       │
│ Bayer-Prozeß        │
│ z.B. Dünnlauge      │
└─────────────────────┘
```

```
┌──────────────────────────────┐
│ Oxidation der                │
│ organischen Substanz         │
│                              │
│ bis K ≤ 1                    │
│                              │
│ z.B. 300°C / 20 min          │
│      40 bar O₂ (bei 25°C)    │
│    bis zu 50 mg/l Cu         │
└──────────────────────────────┘
```

```
┌──────────────────────────────┐
│ Kühlung / Kristallisation    │
│                              │
│ Ruheverhältnis               │
│ Wenig oder keine Rührung     │
└──────────────────────────────┘
```

Verdünnte Lauge
zur Kaustifizierung

```
┌──────────────────────────────┐
│ Filtration / Wäsche          │
│                              │
│ Rückgewinnung von            │
│ Böhmitkristallen             │
└──────────────────────────────┘
```

Böhmit-Produkt

Figur 3

Figur 4

20 /um

Figur 5

20 /um

Figur 6    Röntgen-Diffraktion

Figur 7

Figur 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 197 269 (V.A.W.) <br> * Ansprüche 1,2,4,6-8; Figur 1 * <br> --- | 1,3-5,8 ,9 | C 01 F 7/14 <br> C 01 F 7/47 <br> C 09 K 3/14 |
| A | FR-A-2 441 585 (MAGYAR ALUMINIUMIPARI TROSZT) <br> * Ansprüche 1,5 * <br> --- | 1 | |
| A | US-A-4 215 094 (INAO) <br> --- | | |
| A | EP-A-0 147 167 (ALCOA) <br> ----- | | |

RECHERCHIERTE SACHGEBIETE (Int. Cl.5)

C 01 F 7/00

Der vorliegende Recherchenbericht wurde für alle Patentansprüche erstellt

| Recherchenort | Abschlußdatum der Recherche | Prüfer |
|---|---|---|
| DEN HAAG | 14-06-1989 | ZALM W.E. |